# EUROPÄISCHE PATENTSCHRIFT

(11) **EP 3 254 359 B1**
(45) Veröffentlichungstag und Bekanntmachung des Hinweises auf die Patenterteilung: **13.05.2020**
(21) Anmeldenummer: 16700767.3
(22) Anmeldetag: 15.01.2016
(51) Int. Cl.: H02K 3/50, H02K 15/00

(54) **ELEKTRISCHE MASCHINE MIT DURCH KLAMMERN FIXIERTEM WICKELKOPF**
ELECTRICAL MACHINE HAVING A WINDING HEAD FIXED BY MEANS OF CLAMPS
MOTEUR ÉLECTRIQUE COMPRENANT UNE TÊTE D'ENROULEMENT FIXÉE PAR DES ATTACHES

(30) Priorität: 02.02.2015 DE 102015201734
(43) Veröffentlichungstag der Anmeldung: 13.12.2017
(73) Patentinhaber: Robert Bosch GmbH, 70442 Stuttgart (DE)
(72) Erfinder: LANGE, Fabian, 30175 Hannover (DE); GREMMEL, Daniel, 31249 Hohenhameln (DE)
(86) Internationale Anmeldenummer: PCT/EP2016/050838
(87) Internationale Veröffentlichungsnummer: WO 2016/124377

(56) Entgegenhaltungen:
- CH-A5- 587 579
- DE-A1- 19 718 501
- DE-A1- 19 939 894
- DE-A1-102012 010 234

## Beschreibung

### Gebiet der Erfindung

Die Erfindung betrifft eine elektrische Maschine nach dem Oberbegriff des Anspruchs 1, wie sie beispielsweise aus der DE 19718501 A1 bekannt ist. Insbesondere betrifft die Erfindung eine Ausgestaltung einer Wicklung bzw. eines Wickelkopfes einer elektrischen Maschine.

### Hintergrund der Erfindung

Elektrische Maschinen können unter anderem als Antrieb und/oder Generator in Kraftfahrzeugen, beispielsweise in Elektro- oder Hybridfahrzeugen, eingesetzt werden. Insbesondere im Bereich von Kraftfahrzeugen wird angestrebt, ein Gesamtgewicht der Fahrzeuge auch durch ein geringes Gewicht der Antriebseinheit, d.h. beispielsweise der elektrischen Maschine, niedrig zu halten. Hierdurch können beispielsweise Kosten und Energieverbrauch gesenkt und Schadstoffemissionen verringert werden.

Somit kann es zunehmend von Bedeutung sein, für eine elektrische Maschine eine möglichst hohe Leistungsdichte zu erreichen. Dies kann beispielsweise bedeuten, dass eine Baugröße und/oder ein Materialeinsatz bei Maximierung einer maximal abgebbaren Leistung einer solchen elektrischen Maschine verringert werden.

Eine Möglichkeit, eine hohe Leistungsdichte zu erreichen, ist ein hoher elektrischer Füllfaktor in Nuten von Statoren sowie kleine Wickelköpfe, also den Bereichen von Wicklungen einer elektrischen Maschine, die typischerweise z.B. aufgrund ihrer Lage am Stator nur begrenzt an der Erzeugung der Leistung der elektrischen Maschine beteiligt sein können.

Im Stand der Technik sind Verfahren bekannt, bei denen beispielsweise bei mit Hilfe einer Einzugstechnik hergestellten Statoren eine Höhe des Wickelkopfes über einen Umformprozess reduziert werden kann. Diese Lösungen ermöglichen zwar, die Höhe des Wickelkopfes teilweise zu reduzieren, jedoch zeigt sich häufig ein Rückstellverhalten des Wickelkopfes. Dies kann beispielsweise darin bestehen, dass sich der Wickelkopf über eine gewisse Zeitspanne wieder in begrenztem Maße ungewünscht ausdehnen kann. Dieses Ausdehnen, welches auch unter dem Begriff Auffedern bekannt ist, kann zum einen direkt nach dem Verpressen bzw. Umformen des Wickelkopfes erfolgen, zum andern aber auch als ein zeitabhängiges, langsames Auffedern über einen längeren Zeitraum auftreten. Eine Folge kann darin bestehen, dass sich äußere Maße der Elektromaschine und insbesondere von deren Wickelköpfen im Laufe der Zeit unerwünscht vergrößern. Dementsprechend kann sich eine Leistungsdichte der Maschine verschlechtern. Außerdem kann es notwendig sein, innerhalb der elektrischen Maschine, z.B. zwischen einem Wickelkopf und einem benachbart angeordneten Lagerschild, ausreichend Freiraum zu lassen, um zu verhindern, dass es durch einen sich ausdehnenden Wickelkopf zu Nachteilen wie z.B. einem Beschädigen oder einem Kurzschließen von Wicklungen des Wickelkopfes kommen kann bzw. einem Kurzschluss zwischen Gehäuse und Wicklung.

Um dem Prozess des Auffederns entgegenzutreten, werden die Wickelköpfe von Statoren herkömmlich meist durch Bandagierungen, beispielsweise mittels eines Bandagierbandes, welches z.B. aus imprägnierten Glasfasern bestehen kann, fixiert. Ein Bandagierprozess kann allerdings kosten-und zeitintensiv und zudem schwierig automatisierbar sein, was insbesondere bei stark verpressten Wickelköpfen aufgrund einer schlechten Zugänglichkeit zu erhöhten Kosten und Aufwänden führen kann. Zudem schwankt eine axiale Längenzunahme des Stators aufgrund des Bandagierprozesses, da eine Reproduzierbarkeit von Bandageknoten in Bezug auf Position und Höhe stark eingeschränkt ist.

Eine Alternative stellt eine Haltevorrichtung für eine Statorwicklung eines Elektromotors dar, wie sie z.B. in DE 197 18 501 A1 beschrieben ist.

Die Anmelderin der vorliegenden Anmeldung hat ferner in der früher eingereichten Anmeldung DE 10 2014 220 239 A1 eine elektrische Maschine beschrieben, bei der eine Oberfläche eines Wickelkopfes mithilfe von beispielsweise sickenartigen Eintiefungen über eine Flächenträgheitsmomenterhöhung versteift wurde.

### Vorteil der Erfindung

Ausführungsformen der Erfindung können vorteilhaft ein Rückstellverhalten eines Wickelkopfes einer elektrischen Maschine verbessern, was zusätzliche Arbeitsschritte wie beispielsweise ein Bandagieren entfallen lassen kann und/oder Kosten und Aufwand bei der Herstellung von Elektromaschinen verringern kann.

Gemäß einem Aspekt der Erfindung wird eine elektrische Maschine vorgeschlagen, welche einen Stator mit einer zumindest einer Wicklung aufweist. Die zumindest eine Wicklung ist jeweils aus einer spulenförmigen Anordnung eines elektrischen Leiters gebildet und am Lamellenpaket bzw. Eisenkern des Stators angebracht. Die zumindest eine Wicklung bildet an einer Stirnfläche des Stators einen Wickelkopf aus, der an seiner dem Stator abgewandten Stirnseite eine Wickelkopfoberfläche aufweist. Die elektrische Maschine zeichnet sich dadurch aus, dass die Wickelkopfoberfläche Eintiefungen aufweist, und an dem Wickelkopf Klammern vorgesehen sind, die die Wickelkopfoberfläche umgreifen, wobei die Klammern jeweils zumindest bereichsweise in einer der Eintiefungen aufgenommen sind.

Wie einleitend angegeben, wurden Wickelköpfe elektrischer Maschinen bisher häufig mithilfe von Bandagierungen dagegen geschützt, nach einem Verpressen wieder übermäßig aufzufedern. Ein Bandagieren stellt dabei jedoch einen zusätzlichen und gegebenenfalls aufwändigen Prozessierungsschritt dar. Außerdem weist ein mit einer Bandagierung umgebener Wickelkopf einen gesteigerten Platzbedarf auf, sodass sich ein Bauraum wie auch eine Leistungsdichte der elektrischen Maschine verringern.

Erfindungsgemäß ist vorgesehen, Wicklungen des Stators im Bereich von Wickelköpfen mithilfe von Klammern zu fixieren. Die Klammern umgreifen hierbei die

Wickelkopfoberfläche, d..h. die Klammern erstrecken sich beispielsweise kraftschlüssig zumindest um Teile der Oberfläche des Wickelkopfes herum erstrecken, und können dabei eine Kraft derart auf die Wickelkopfoberfläche bewirken, dass einem Auffedern von zuvor verpressten Wicklungen entgegengewirkt wird. Eine von den Klammern auf den Wickelkopf ausgeübte Kraft kann dabei hin zu einem Inneren des Wickelkopfes gerichtet sein.

Erfindungsgemäß ist jede der Klammern zumindest bereichsweise in einer der in der Wickelkopfoberfläche vorgesehenen Eintiefungen aufgenommen. Ein Vorsehen von Eintiefungen in der Wickelkopfoberfläche sowie das Anordnen der Klammern teilweise in diesen Eintiefungen kann hierbei mehrere Vorteile ermöglichen.

Die Eintiefungen können z.B. helfen, den Wickelkopf zu stabilisieren. An dem Wickelkopf können gezielt Eintiefungen ausgebildet werden, beispielsweise indem der Wickelkopf beim Verpressen nicht mit einem Werkzeug mit einer ebenen Oberfläche sondern mit einem Werkzeug mit einer strukturierten Oberfläche kraftbeaufschlagt wird. Generell können die Eintiefungen mit einer Vielzahl möglicher Geometrien ausgebildet werden und können insbesondere dazu dienen, ein Flächenträgheitsmoment des Wickelkopfes an dessen Oberfläche zu vergrößern, um beispielsweise die gewünschte erhöhte Stabilität zu erreichen. Zum Beispiel können die Eintiefungen als längliche Sicken ausgestaltet sein. In einer solchen Ausgestaltung kann es vorteilhaft sein, die Sicken quer zu einer Umfangsrichtung des Stators orientiert verlaufen zu lassen, beispielsweise senkrecht zu der Umfangsrichtung, d.h. in radialer Richtung. Im Allgemeinen sind die Eintiefungen bzw. Sicken in Umfangsrichtung des Stators voneinander beabstandet.

Die Eintiefungen sind erfindungsgemäß durch lokale Verformung eines elektrischen Leiters der Wicklungen gebildet sein. Elektrische Leiter beispielsweise in Form von Drähten können zum Beispiel beim Wickeln der Wicklungen und anschließenden Verpressen derart verformt werden, dass sich Eintiefungen bilden. Beispielsweise können die Wickelköpfe mithilfe eines Werkzeugs verpresst werden, dessen Pressfläche eine geeignet strukturierte Form aufweist. Mögliche Ausgestaltungen einer mit Eintiefungen versehenen Wickelkopfoberfläche sowie eines zu deren Herstellung einsetzbaren Werkzeugs sind in der früheren Anmeldung DE 10 2014 220 239 A1 der Anmelderin beschrieben.

Neben ihrer stabilisierenden Wirkung dienen die Eintiefungen erfindungsgemäß dazu, die an der Wickelkopfoberfläche anzuordnenden Klammern zumindest teilweise aufzunehmen. Mit anderen Worten umklammern die Klammern den Wickelkopf im Bereich der Eintiefungen.

Erfindungsgemäß sind alle an einem Wickelkopf angeordneten Klammern untereinander durch Stege verbunden, so dass z.B. alle Klammern zusammen an dem Wickelkopf angebracht werden können. Erfindungsgemäß sind an einem Wickelkopf angeordnete Klammern untereinander durch Stege derart verbunden, dass die Stege einen geschlossenen Ring bilden. Zum Beispiel können sich mehrere Klammern von einem radial innen oder radial außen liegenden Ring in radialer Richtung nach außen bzw. innen erstrecken, wobei der Ring die benachbarten Klammern miteinander mechanisch verbindet. Der Ring kann hierbei zusätzlich mechanisch stabilisierend für die gesamte Anordnung aus Klammern wirken. Es können auch mehrere durch Verbindungsstege gebildete Ringe vorgesehen sein, z.B. ein Ring an radial außen liegenden Enden der Klammern und ein Ring an radial innenliegenden Enden.

Die Klammern können dabei jeweils eine Geometrie aufweisen, die komplementär zu einer Geometrie einer zugehörigen Eintiefung in der Wickelkopfoberfläche ist. Anders ausgedrückt können die Eintiefungen einen bestimmten Querschnitt aufweisen und sich entlang der Oberfläche eines Wickelkopfes mit einem bestimmten Verlauf erstrecken und die Klammern können entsprechend eine Geometrie aufweisen, sodass ihr Querschnitt zumindest teilweise in der zugehörigen Eintiefung aufgenommen werden kann und sie sich der Eintiefung folgend entlang der Oberfläche des Wickelkopfes erstrecken. Dadurch, dass die Klammern zumindest bereichsweise in den Eintiefungen aufgenommen sind, kann erreicht werden, dass die Klammern weniger über die Oberfläche des Wickelkopfes angrenzend an die Eintiefungen überstehen. Auf diese Weise kann eine Gesamtbaugröße des durch die Klammern im Bereich der Wickelköpfe stabilisierten Stators verringert und somit eine Leistungsdichte bzw. ein Platzbedarf der damit ausgestatteten elektrischen Maschine verbessert werden.

Gemäß einer Ausführungsform stehen die Klammern in axialer Richtung des Stators über eine Oberfläche des Wickelkopfes über. Anders ausgedrückt, sind die Klammern nicht vollständig in den Eintiefungen aufgenommen, sodass ihre nach außen gerichtete Oberfläche beispielsweise bündig mit einer angrenzenden Oberfläche des Wickelkopfes wäre, sondern die Klammern weisen beispielsweise eine größere Dicke auf als eine Tiefe der Eintiefungen, sodass sie in axialer Richtung nach außen über angrenzende Oberflächen des Wickelkopfes überstehen. Dabei können die Klammern beispielsweise so weit in axialer Richtung überstehen, dass sie selbst nachdem der Wickelkopf in Bereichen zwischen den Klammern sich unvermeidlich wieder geringfügig aufgefedert hat die am weitesten in axialer Richtung liegenden Bereiche des Stators bilden. Anders ausgedrückt kann es vorteilhaft sein, die Klammern und Eintiefungen derart zu dimensionieren, dass die Klammern aus den Eintiefungen über die benachbarten Oberflächen des Wickelkopfes überstehen, selbst nachdem sich der Wickelkopf nach einem vorangehenden Verpressen in diesen Bereichen wieder teilweise aufgefedert hat. Damit kann z.B. erreicht werden, dass auch nach dem Auffedern nicht Bereiche des Wickelkopfes beispielsweise in Kontakt mit in axialer Richtung an den Wickelkopf angrenzenden Bauteilen wie zum Beispiel einem Lagerschild kommen und dadurch eventuell beschädigt oder kurzgeschlossen werden. Generell hängt ein Maß, mit dem die Klammern sinnvollerweise über die Wickelkopfoberfläche von mehreren Parametern wie z.B. einem Abstand benachbarter Klammern in Umfangsrichtung des Stators, einer Art der Verpressung des Wickelkopfes, einer Art der Wicklungen innerhalb des Wickelkopfes, etc. ab. Beispielsweise können die Klammern um zwischen 0,1 und 10mm, vorzugsweise um 1 bis 5mm in axialer Richtung über benachbarte Oberflächen des Wickelkopfes überstehen.

Nach einer nicht-erfindungsgemäßen Ausführung können an einem Wickelkopf angeordnete Klammern als separate einzelne Bauteile vorgesehen sein. Mit anderen Worten sind in diesem Fall zumindest einige der Klammern nicht mit anderen Klammern verbunden, sondern als einzelne Bauteile vorgesehen. Bei einem Montieren der nicht-erfindungsgemäßen Klammern an dem Wickelkopf kann hierdurch zwar ein erhöhter Arbeitsaufwand auftreten. Andererseits können die nicht-erfindungsgemäßen, nicht miteinander verbundene Klammern für verschiedene Wickelköpfe eingesetzt werden, beispielsweise für Wickelköpfe unterschiedlicher Durchmesser oder Varianten bei der Position oder dem Aufbau der Abgangsdrähte, da keine Geometrie von benachbarte Klammern verbindenden Stegen speziell auf einen Wickelkopftyp angepasst ist.

Die Klammern können beispielsweise aus Kunststoff bestehen. Als solche können die Klammern zum Beispiel kostengünstig spritzgegossen werden. Außerdem können Kunststoffklammern für eine gewünschte elektrische Isolierung am Wickelkopf gegenüber angrenzenden Bauteilen wie z.B. einem Lagerschild dienen.

Ferner kann der Wickelkopf einen thermoplastischen Kunststoff und/oder ein Kunstharz aufweisen, wodurch Wicklungen miteinander mechanisch verbunden sein können, sodass der Wickelkopf z.B. nach einem Verpressen besser seine Form halten kann.

Verkürzend zusammengefasst kann ein Gedanke, der Ausführungsformen der Erfindung zugrunde liegt, darin gesehen werden, einen kosten- und zeitintensiven sowie schwierig automatisierbaren Bandagierprozess für einen Wickelkopf einer elektrischen Maschine durch einen Fügeprozess von Klammern, die den Wickelkopf zusammenhalten, zu ersetzen. Die Klammern können dabei in geeignet ausgebildete Eintiefungen in der Wickelkopfoberfläche aufgenommen sein. Durch eine Lagerung der Klammern in den beispielsweise sickenartigen Eintiefungen des Wickelkopfes kann dieser in axialer Richtung nur geringfügig verlängert sein, was zu einer Steigerung der Leistungsdichte bzw. einer Verringerung eines notwendigen Bauraums beitragen kann. Eine Winkellage der Klammern kann dabei durch die Eintiefungen festgelegt und fixiert sein. Ein Sicherheitsabstand zwischen dem Wickelkopf und beispielsweise einem in axialer Richtung angrenzenden Lagerschild kann verringert werden, da die Klammern ein Rückstellen bzw. Auffedern des zuvor verpressten Wickelkopfes weitgehend vermeiden können. Ferner kann bei einem herkömmlichen Bandagierprozess axial herausstehendes Material, beispielsweise in Form von Knoten oder allgemein Bandageband, welches eine Einhaltung von Luft- und Kriechstrecke beeinflussen kann, entfallen, sodass hierauf ausgerichtete Toleranzen enger ausgelegt werden können. Hierdurch kann wiederum Bauraum eingespart werden.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine perspektivische Ansicht eines Stators einer erfindungsgemäßen elektrischen Maschine ohne daran angebrachte Klammern.
Fig. 2 eine perspektivische Ansicht des Stators aus Fig. 1 mit daran angebrachten Klammern.
Fig. 3 und 3a zeigen eine teilweise weggeschnittene Ansicht sowie eine vergrößerte Ansicht des in Fig. 2 dargestellten Stators.
Fig.4 zeigt eine perspektivische Ansicht von Klammern, die durch ringförmig angeordnete Stege miteinander verbunden sind.
Fig. 5 zeigt eine perspektivische weggeschnittene Teilansicht einer einen Wickelkopf umgreifenden Klammer.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

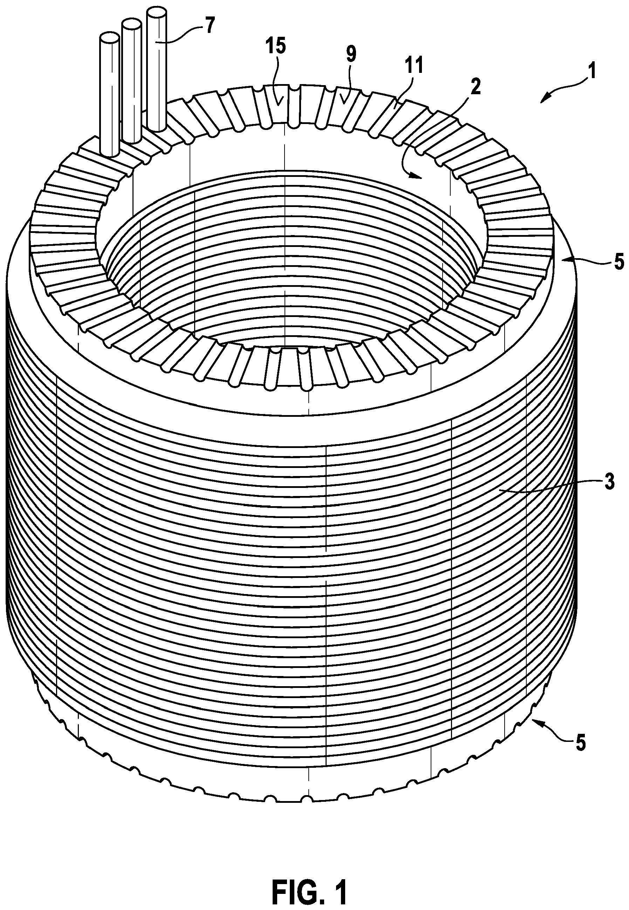

Fig. 1 zeigt einen Stator 1 einer elektrischen Maschine gemäß einer Ausführungsform der vorliegenden Erfindung. Der Stator 1 weist ein zylindrisches Lamellenpaket 3 aus übereinander gestapelten Lamellenblechen auf. In dem Lamellenpaket 3 sind in Längsrichtung verlaufende Nuten vorgesehen, in denen zumindest eine Wicklung 2 aus einer spulenförmigen Anordnung eines elektrischen Leiters wie z.B. eines Wicklungsdrahtes angeordnet ist (in der Figur nicht detailliert dargestellt). Die zumindest eine Wicklung 2 ragt an axialen Enden des Lamellenpaketes 3 über dieses über und bildet dort Wickelköpfe 5. Anschlüsse 7 sind mit der zumindest einen Wicklung 2 verbunden, um die Wicklung 2 von außen her mit elektrischer Spannung beaufschlagen zu können. In den Bereichen der Wickelköpfe 5 kann zwischen den

Wicklungsdrähten ein thermoplastischer Kunststoff oder ein Kunstharz vorgesehen sein, um die Drähte besser zusammen zu halten.

Um ein Volumen der Wickelköpfe 5 zu reduzieren, können diese mithilfe von Presswerkzeugen verpresst werden. Dabei wird auf eine außenliegende Wickelkopfoberfläche 9 Druck ausgeübt und so die Wickeldrähte in dem Wickelkopf 5 zusammengepresst. Das Verpressen erfolgt dabei jeweils derart, dass an einer dem Stator 1 abgewandten Stirnfläche 15 des Wickelkopfes 5 sickenartige Eintiefungen 11 eingepresst werden. Diese sickenartige Eintiefungen 11 können einerseits dazu dienen, ein Flächenträgheitsmoment des Wickelkopfes 5 an dessen Wickelkopfoberfläche 9 zu erhöhen und den Wickelkopf 5 dadurch zu stabilisieren.

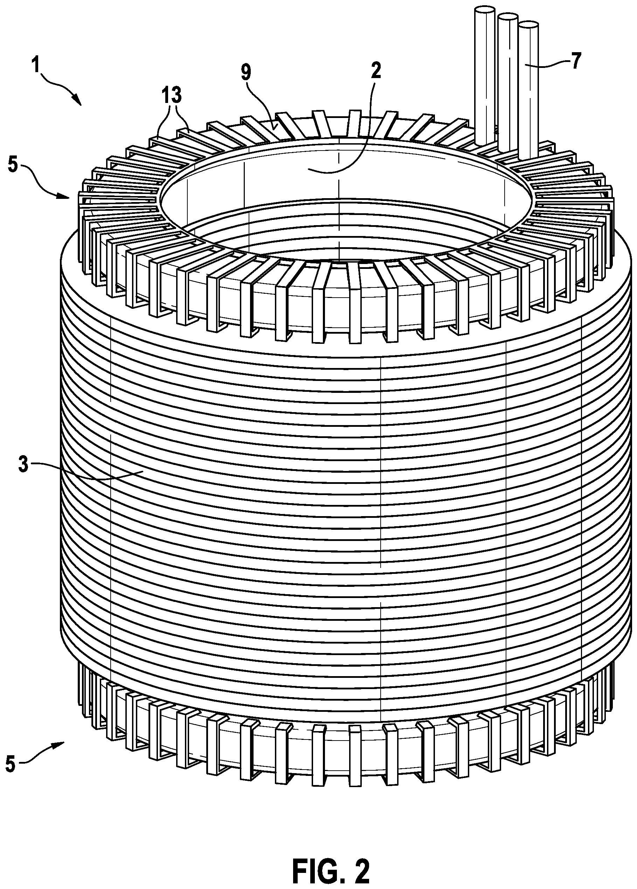

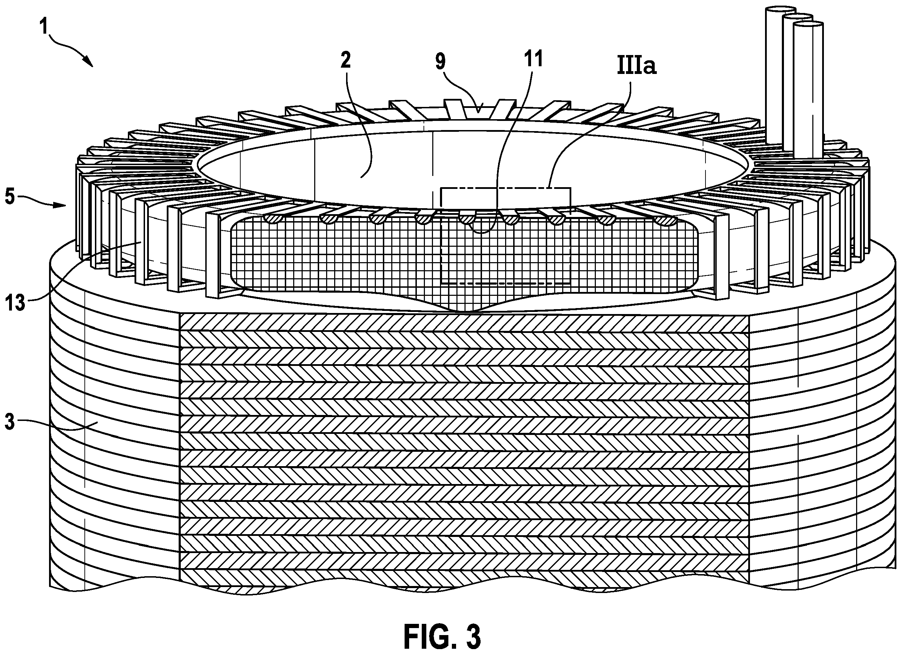

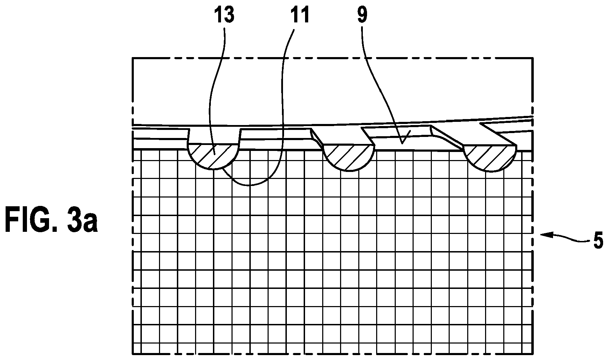

Andererseits können, wie in den Figuren 2, 3, 3a und 5 veranschaulicht, in den sickenartigen Eintiefungen 11 Klammern 13 zumindest teilweise aufgenommen werden. Die Klammern 13 umgreifen zumindest Teile der Wickelkopfoberfläche 9 in einer Weise, dass eine ins Innere des Wickelkopfs 5 gerichtete Kraft auf die Wickelkopfoberfläche 9 bewirkt wird. Auf diese Weise können die Klammern 13 den Wickelkopf 5, nachdem dieser verpresst wurde, weitgehend zusammenhalten.

Im dargestellten Beispiel verlaufen die Eintiefungen 11 linear und in radialer Richtung, d.h. senkrecht zu einer Umlaufrichtung des Stators 1, entlang der Wickelkopfoberfläche 9 im Bereich von deren Stirnfläche 15 und bilden dabei Sicken. Die Eintiefungen 11 erstrecken sich dabei vorzugsweise über eine gesamte Breite des Wickelkopfes 5, d.h. von einer radial innenliegenden Kante hin zu einer radial außen liegenden Kante. Die Klammern 13 folgen zumindest an der Stirnfläche 15 des Wickelkopfes 5 den Eintiefungen 11, d.h. sie weisen eine zu den Eintiefungen 11 passende Geometrie auf, und sind zumindest teilweise in den Eintiefungen 11 aufgenommen. Die Klammern 13 sind somit in den Eintiefungen 11 gelagert, wodurch sie unter anderem gegen ein Verdrehen gesichert sind. Bei linearen Sicken weisen somit auch die Klammern 13 zumindest in einem in den Sicken aufgenommenen Bereich eine lineare Erstreckung auf.

Entlang des Umfangs des runden Wickelkopfes 5 sind die Klammern dabei zueinander beabstandet angeordnet. Ein Abstand zwischen benachbarten Klammern kann dabei abhängig von einer zu erreichenden Halte- oder Pressfunktion gewählt werden. Beispielsweise kann der Abstand in etwa dem Abstand zwischen benachbarten Nuten in dem Lamellenpaket 3 entsprechen. Insbesondere kann der Abstand beispielsweise zwischen 1 und 40mm, vorzugsweise zwischen 3 und 15mm, betragen. Ferner kann der Abstand größer sein als eine Breite der Klammern 13 in Umfangsrichtung des Stators.

Ein Querschnitt der sickenartigen Eintiefungen 11 ist beispielsweise in etwa halbkreisförmig, kann jedoch auch mit anderen, vorzugsweise verrundeten Geometrien ausgestaltet werden. Beispielsweise können die Eintiefungen 11 wenige Millimeter, z.B. weniger als 10mm, oder nur wenige Zehntel Millimeter tief sein, vorzugsweise jedoch mehr als 0,1mm.

Die Klammern 13 sind vorzugsweise geringfügig dicker als die Tiefe der Eintiefungen 11, sodass sie in axialer Richtung leicht über die Wickelkopfoberfläche 9 an der Stirnfläche 15 überstehen. Ein Überstand kann dabei beispielsweise wenige Zehntel Millimeter, vorzugsweise mehr als 0,1mm, bis hinzu wenigen Millimetern, vorzugsweise weniger als 10mm, betragen.

An einer radial außenliegenden Seitenfläche 17 und einer radial innenliegenden Seitenfläche 19 des Wickelkopfes 5 liegt die Klammer 13 vorzugsweise direkt an, ist aber nicht unbedingt in einer Eintiefung aufgenommen. Ferner hintergreift die Klammer 13 den Wickelkopf 5 an einer der Stirnfläche 15 entgegengesetzten Oberfläche 21 mit einem Fortsatz 23.

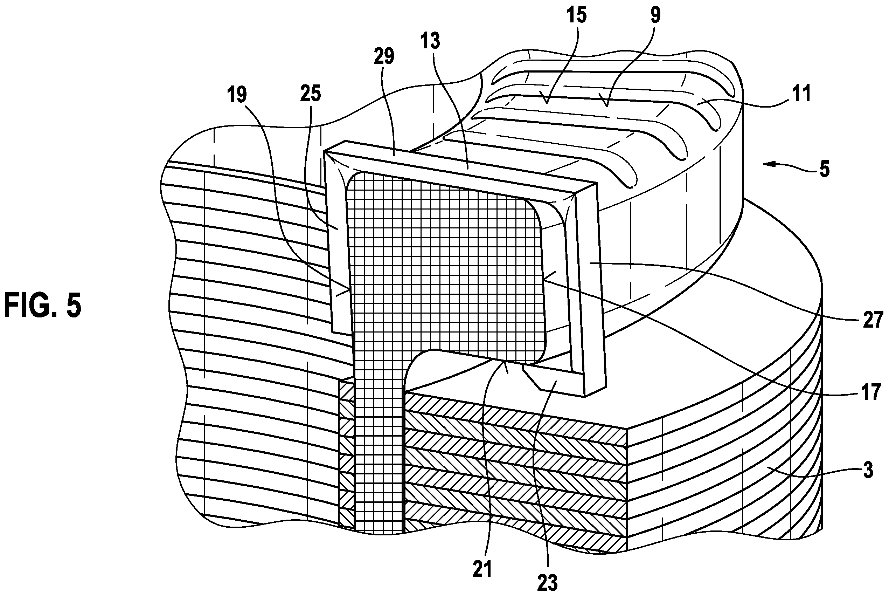

Die Klammer 13 weist somit in dem in Fig. 5 dargestellten Beispiel in etwa eine U-Form auf mit zwei parallelen Schenkeln 25, 27, einem die Schenkel an einem Ende verbindenden Arm 29, welcher teilweise in einer der Eintiefungen 11 aufgenommen ist, und einem an einem der Schenkel 25, 27 an einem dem Arm 29 gegenüberliegenden Ende ansetzenden Fortsatz 23.

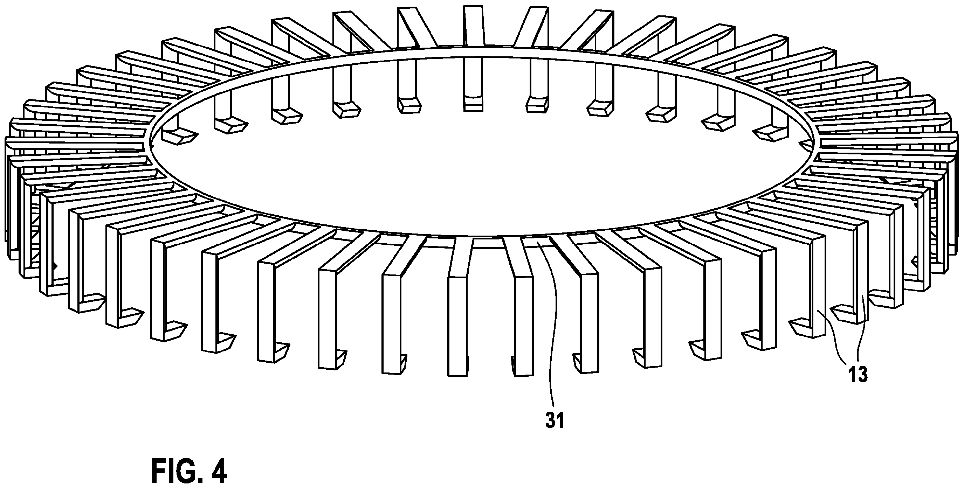

In Fig. 4 ist eine Ausgestaltung der Klammer 13 dargestellt, bei der mehrere Klammern 13 über Stege 31 miteinander verbunden sind. Die Stege setzen im dargestellten Beispiel an einem radial inneren Bereich der Klammern 13 an, könnten alternativ oder ergänzend aber auch an anderen Positionen wie beispielsweise einem radial äußeren Bereich der Klammern 13 ansetzen. Die Stege 31 bilden dabei einen Ring, von dem die Klammern 13 in radialer Richtung abragen. Dadurch, dass viele Klammern 13 durch Stege 31 miteinander verbunden sind, kann die gesamte Einheit einfach gehandhabt und an dem Wickelkopf 5 montiert werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektrische Maschine, aufweisend
einen Stator (1); und zumindest eine Wicklung (2);
wobei die zumindest eine Wicklung (2) jeweils aus einer spulenförmigen Anordnung eines elektrischen Leiters gebildet ist und am Stator (1) angebracht ist;
wobei die zumindest eine Wicklung (2) an einer Stirnfläche des Stators (1) einen Wickelkopf (5) ausbildet, der an seiner dem Stator (1) abgewandten Stirnseite eine Wickelkopfoberfläche (9) aufweist;
**dadurch gekennzeichnet, dass**
die Wickelkopfoberfläche (9) Eintiefungen (11) aufweist, die durch lokale Verformung des elektrischen Leiters gebildet und als längliche Sicken ausgestaltet sind, dass die Sicken quer zu einer Umfangsrichtung des Stators (1) verlaufen, und dass an dem Wickelkopf (5) Klammern (13) vorgesehen sind, die den Wickelkopf (5) hintergreifen und jeweils zumindest bereichsweise in einer der Eintiefungen (11) aufgenommen sind, und dass an einem der Wickelköpfe (5) angeordnete Klammern (13) untereinander durch Stege (31), welche einen geschlossenen Ring bilden, verbunden sind.

2. Elektrische Maschine gemäß Anspruch 1, die Klammern (13) jeweils eine Geometrie aufweisen, die komplementär zu einer Geometrie einer zugehörigen Eintiefung (11) in der Wickelkopfoberfläche (9) ist.

3. Elektrische Maschine gemäß einem der Ansprüche 1 oder 2, wobei die Klammern (13) in axialer Richtung des Stators (1) über eine Stirnfläche (15) des Wickelkopfes überstehen.

4. Elektrische Maschine gemäß einem der Ansprüche 1 bis 3, wobei die Klammern (13) aus Kunststoff bestehen.

5. Elektrische Maschine gemäß einem der Ansprüche 1 bis 4, wobei der Wickelkopf (5) einen thermoplastischen Kunststoff und/oder ein Kunstharz aufweist.

## Claims

1. Electrical machine, having
a stator (1); and at least one winding (2);
wherein the at least one winding (2) is in each case formed from a coil-like arrangement of an electrical conductor and is fitted to the stator (1);
wherein the at least one winding (2) forms an end winding (5) on an end face of the stator (1), which end winding has an end winding surface (9) on its end side which is averted from the stator (1);
**characterized in that**
the end winding surface (9) has recesses (11) which are formed by local deformation of the electrical conductor and are configured as elongate beads, **in that** the beads run transversely in relation to a circumferential direction of the stator (1), and **in that** clamps (13) are provided on the end winding (5), which clamps engage behind the end winding (5) and are each accommodated in one of the recesses (11) at least in regions, and **in that** clamps (13) which are arranged on one of the end windings (5) are connected to one another by webs (31) which form a closed ring.

2. Electrical machine according to Claim 1, wherein the clamps (13) each have a geometry which is complementary to a geometry of an associated recess (11) in the end winding surface (9).

3. Electrical machine according to either of Claims 1 and 2, wherein the clamps (13) project beyond an end face (15) of the end winding in the axial direction of the stator (1).

4. Electrical machine according to one of Claims 1 to 3, wherein the clamps (13) consist of plastic.

5. Electrical machine according to one of Claims 1 to 4, wherein the end winding (5) contains a thermoplastic synthetic material and/or a synthetic resin.

## Revendications

1. Machine électrique, présentant
un stator (1) ; et au moins un enroulement (2) ; l'au moins un enroulement (2) étant formé à chaque fois à partir d'un agencement en forme de bobine d'un conducteur électrique et étant monté sur le stator (1) ;
l'au moins un enroulement (2) constituant au niveau d'une surface frontale du stator (1) une tête d'enroulement (5) qui, au niveau de son côté frontal opposé au stator (1), présente une surface de tête d'enroulement (9) ;
**caractérisée en ce que**
la surface de tête d'enroulement (9) présente des renfoncements (11) qui sont formés par une déformation locale du conducteur électrique et qui sont configurés sous forme de moulures allongées, **en ce que** les moulures s'étendent transversalement à une direction périphérique du stator (1) et **en ce que** des pinces (13) sont prévues au niveau de la tête d'enroulement (5), lesquelles s'engagent par l'arrière avec la tête d'enroulement (5) et sont à chaque fois reçues au moins en partie dans l'un des renfoncements (11), et **en ce que** des pinces (13) disposées au niveau de l'une des têtes d'enroulement (5) sont connectées les unes aux autres par des nervures (31) qui forment une bague fermée.

2. Machine électrique selon la revendication 1, dans laquelle les pinces (13) présentent à chaque fois une géométrie qui est complémentaire à une géométrie d'un renfoncement associé (11) dans la surface de tête d'enroulement (9).

3. Machine électrique selon l'une quelconque des revendications 1 et 2, dans laquelle les pinces (13) dépassent dans la direction axiale du stator (1) au-delà d'une surface frontale (15) de la tête d'enroulement.

4. Machine électrique selon l'une quelconque des revendications 1 à 3, dans laquelle les pinces (13) se composent de plastique.

5. Machine électrique selon l'une quelconque des revendications 1 à 4, dans laquelle la tête d'enroulement (5) présente un plastique thermoplastique et/ou une résine synthétique.
